# EUROPEAN PATENT APPLICATION

(11) **EP 1 426 882 A2**
(43) Date of publication of application: **09.06.2004**
(21) Application number: 03256172.2
(22) Date of filing: 30.09.2003
(51) Int. Cl.: G06F 17/30

(54) **Information storage and retrieval**

(30) Priority: 27.11.2002 GB 0227683
(71) Applicant: Sony United Kingdom Limited, Weybridge, Surrey KT13 0XW (GB)
(72) Inventor: Trepess, David William, Basingstoke, Hampshire RG22 4TN (GB); Thorpe, Jonathan Richard, Winchester, Hampshire SO22 4QF (GB)
(74) Representative: DeVile, Jonathan Mark, Dr.

(57) **Abstract**

An information retrieval apparatus includes a mapping processor operable to receive data representative of a map of information items from a set of information items identified in a search. The map provides the identified information items with respect to positions in an array in accordance with a mutual similarity of the information items. The map data is arranged to the effect that similar information items map to similar positions in the array. The mapping processor is operable to process the map data to form a hierarchical clustering of information items providing a first clustering level of information items and at least one other clustering level of information items for clusters of information items within the first level clusters. The formation of the information items into clusters in accordance with a hierarchical arrangement facilitates navigation and display of the information items. Furthermore, the mapping processor may provide the first clustering level of information items with a characterising information feature associated with each of the first level clusters of information items. Correspondingly, the display processor may provide a characterising information feature for the clusters of information items within the first level clusters at the other hierarchical level. The characterising information feature provides a facility for distinguishing one cluster from another.

## Description

### Field of the Invention

This invention relates to information retrieval apparatus and methods.

### Background of the Invention

There are many established systems for locating information (e.g. documents, images, emails, patents, internet content or media content such as audio/video content) by searching under keywords. Examples include internet search "engines" such as those provided by "Google"^{TM} or "Yahoo"^{TM} where a search carried out by keyword leads to a list of results which are ranked by the search engine in order of perceived relevance.

However, in a system encompassing a large amount of content, often referred to as a massive content collection, it can be difficult to formulate effective search queries to give a relatively short list of search "hits". For example, at the time of preparing the present application, a Google search on the keywords "massive document collection" drew 243000 hits. This number of hits would be expected to grow if the search were repeated later, as the amount of content stored across the internet generally increases with time. Reviewing such a list of hits can be prohibitively time-consuming.

In general, some reasons why massive content collections are not well utilised are:
- a user doesn't know that relevant content exists
- a user knows that relevant content exists but does not know where it can be located
- a user knows that content exists but does not know it is relevant
- a user knows that relevant content exists and how to find it, but finding the content takes a long time

The paper "Self Organisation of a Massive Document Collection", Kohonen et al, IEEE Transactions on Neural Networks, Vol 11, No. 3, May 2000, pages 574-585 discloses a technique using so-called "self-organising maps" (SOMs). These make use of so-called unsupervised self-learning neural network algorithms in which "feature vectors" representing properties of each document are mapped onto nodes of a SOM.

In the Kohonen et al paper, a first step is to pre-process the document text, and then a feature vector is derived from each pre-processed document. In one form, this may be a histogram showing the frequencies of occurrence of each of a large dictionary of words. Each data value (i.e. each frequency of occurrence of a respective dictionary word) in the histogram becomes a value in an n-value vector, where n is the total number of candidate words in the dictionary (43222 in the example described in this paper). Weighting may be applied to the n vector values, perhaps to stress the increased relevance or improved differentiation of certain words.

The n-value vectors are then mapped onto smaller dimensional vectors (i.e. vectors having a number of values m (500 in the example in the paper) which is substantially less than n. This is achieved by multiplying the vector by an (n x m) "projection matrix" formed of an array of random numbers. This technique has been shown to generate vectors of smaller dimension where any two reduced-dimension vectors have much the same vector dot product as the two respective input vectors. This vector mapping process is described in the paper "Dimensionality Reduction by Random Mapping: Fast Similarity Computation for Clustering", Kaski, Proc IJCNN, pages 413-418, 1998.

The reduced dimension vectors are then mapped onto nodes (otherwise called neurons) on the SOM by a process of multiplying each vector by a "model" (another vector). The models are produced by a learning process which automatically orders them by mutual similarity onto the SOM, which is generally represented as a two-dimensional grid of nodes. This is a non-trivial process which took Kohonen et al six weeks on a six-processor computer having 800 MB of memory, for a document database of just under seven million documents. Finally the grid of nodes forming the SOM is displayed, with the user being able to zoom into regions of the map and select a node, which causes the user interface to offer a link to an internet page containing the document linked to that node.

### Summary of the Present Invention

Various aspects and features of the present invention are defined in the appended claims.

The present invention addresses a technical problem of finding a practical and manageable way of presenting the results of a search for information items from a large data base of information items.

According to one aspect of the present invention these is provided an information retrieval apparatus comprising a mapping processor operable to receive data representative of a map of information items from a set of information items identified in a search. The map provides the identified information items with respect to positions in an array in accordance with a mutual similarity of the information items. The mapping data is arranged to the effect that similar information items map to similar positions in the array. The mapping processor is operable to process the map data to form a hierarchical clustering of information items providing a first clustering level of information items and at least one other clustering level of information items for clusters of information items within the first level clusters. The formation of the information items into clusters in accordance with a hierarchical arrangement facilitates navigation and display of the information items.

Furthermore the mapping processor may provide the first clustering level of information items with a characterising information feature associated with each of the first level clusters of information items. Correspondingly the mapping processor may provide a characterising information feature for the clusters of information items within the first level clusters at the other hierarchical level. The characterising information feature provides a facility for distinguishing one cluster from another.

Generally, the information items include a plurality of characterising information features, the characterising information features of each information item being used to form a feature vector for each information item, the feature vector being used to map the information item onto a position within the array. As such, the characterising information feature associated with each first level cluster and the other characterising information feature associated with each cluster within the other level of information items are formed from a most common characterising information feature present in the information items associated with each cluster.

For example, the information items may comprise textual information, the characterising information features being words, and the feature vector for an information item representing a set of frequencies of occurrence, within that information item, of each of a group of words. For this example, the characterising information item associated with each cluster is the most common word of the textual information associated with each of the information items within each cluster.

The information retrieval apparatus may also comprise a display processor in combination with a graphical user interface operable to display a representation of at least some of the positions of the array as an n-dimensional display array of display points within a display area on a graphical display. The display area may include at least two areas, one area providing an n-dimensional representation of the first hierarchical level of clusters and the other area providing an n-dimensional representation of the other hierarchical level of clusters. The number of dimensions n may be an integer and typically but not exclusively the number of dimensions may be two, although it will be appreciated that one or three are also possible. Having more than one part of the display area provides a facility for displaying the different hierarchical levels of information items. For example, the first level information items could be displayed in one area and the information items appearing in a cluster selected from the first area could be displayed in the second area. As such, if a search reveals a sparsely populated array, a relative navigation between different clusters revealed in the first area can be managed more easily, with a more detailed display of information items provided in a selected cluster presented in the second area.

Further respective aspects and features of the invention are defined in the appended claims.

### Brief Description of the Drawings

Embodiments of the invention will now be described, by way of example only, with reference to the accompanying drawings in which:
Figure 1 schematically illustrates an information storage and retrieval system;
Figure 2 is a schematic flow chart showing the generation of a self-organising map (SOM);
Figures 3a and 3b schematically illustrate term frequency histograms;
Figure 4a schematically illustrates a raw feature vector;
Figure 4b schematically illustrates a reduced feature vector;
Figure 5 schematically illustrates an SOM;
Figure 6 schematically illustrates a dither process;
Figures 7 to 9 schematically illustrate display screens providing a user interface to access information represented by the SOM;
Figure 10 provides a schematic block diagram of an information retrieval apparatus according to an embodiment of the invention;
Figure 11 provides an illustrative representation of a part flow diagram representing a process of generating a hierarchical arrangement of information items identified in a search;
Figure 12 provides a schematic representation of a screen providing two areas for displaying different levels of the hierarchy shown in Figure 11;
Figure 13 provides an illustrative representation of three types of characterising information features for an example information item;
Figure 14 provides a schematic illustration of a graphical user interface for forming a search query according to an example embodiment of the invention;
Figure 15 provides a schematic illustration of the formation of a composite feature vector in accordance with a Boolean AND operation;
Figure 16 illustrates a combination of two feature vectors in accordance with a Boolean OR operator and a third feature vector in accordance with a Boolean NOT operator;
Figure 17 schematically illustrates a part of the two-dimensional map of identified information items showing the results of a search in accordance with the Boolean operators and feature vectors of Figure 16, and
Figure 18(a) and 18(b) provide illustrative bar graphs providing two examples of colour histograms for two video images forming a search query, and Figure 18(c) provides an illustrative bar graph produced by combining the colour histograms of Figures 18(a) and 18(b);

### Description of Preferred Embodiments

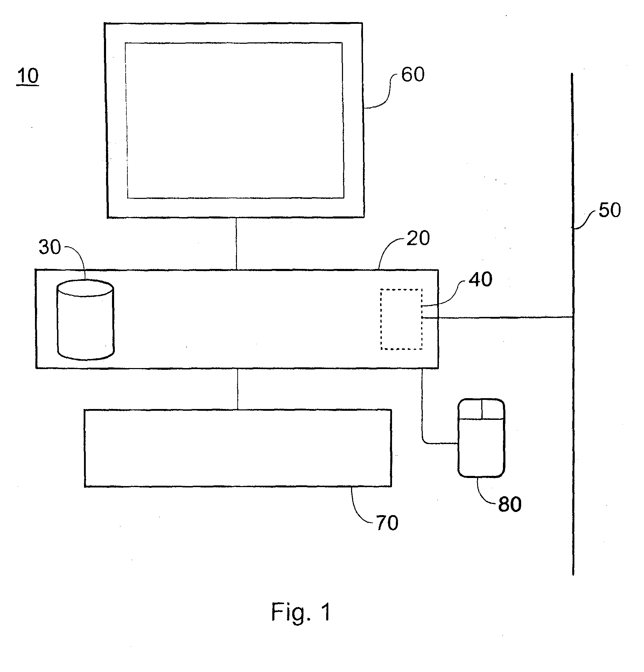

Figure 1 is a schematic diagram of an information storage and retrieval system based around a general-purpose computer 10 having a processor unit 20 including disk storage 30 for programs and data, a network interface card 40 connected to a network 50 such as an Ethernet network or the Internet, a display device such as a cathode ray tube device 60, a keyboard 70 and a user input device such as a mouse 80. The system operates under program control, the programs being stored on the disk storage 30 and provided, for example, by the network 50, a removable disk (not shown) or a pre-installation on the disk storage 30.

The storage system operates in two general modes of operation. In a first mode, a set of information items (e.g. textual information items) is assembled on the disk storage 30 or on a network disk drive connected via the network 50 and is sorted and indexed ready for a searching operation. The second mode of operation is the actual searching against the indexed and sorted data.

The embodiments are applicable to many types of information items. A non-exhaustive list of appropriate types of information includes patents, video material, emails, presentations, internet content, broadcast content, business reports, audio material, graphics and clipart, photographs and the like, or combinations or mixtures of any of these. In the present description, reference will be made to textual information items. The textual information items may be associated with, or linked to, non-textual items. So, for example, audio and/or video material may be associated with "MetaData" which is a textual information item defining that material in textual terms.

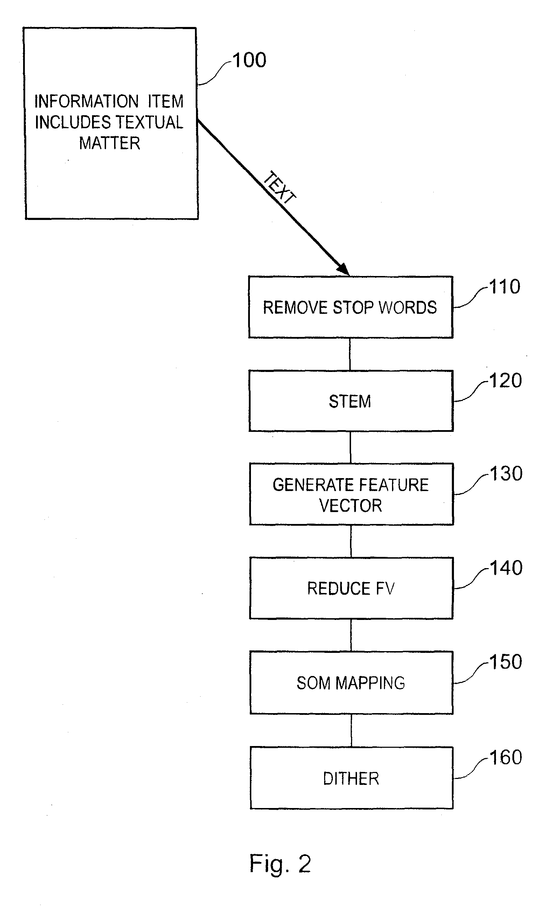

The information items are loaded onto the disk storage 30 in a conventional manner. Preferably, they are stored as part of a database structure which allows for easier retrieval and indexing of the items, but this is not essential. Once the information and items have been so stored, the process used to arrange them for searching is shown schematically in Figure 2.

It will be appreciated that the indexed information items need not be stored on the local disk drive 30. The information items could be stored on a remote drive connected to the system 10 via the network 50. Alternatively, information may be stored in a distributed manner, for example at various sites across the internet. If the information is stored at different internet or network sites, a second level of information storage could be used to store locally a "link" (e.g. a Universal Resource Identifier URI) to the remote information, perhaps with an associated summary, abstract or metadata associated with that link. So, the remotely held information would not be accessed unless the user selected the relevant link (e.g. from the results list 260 to be described below), although for the purposes of the technical description which follows, the remotely held information, or the abstract/summary/metadata, or the link/URI could be considered as the "information item".

In other words, a formal definition of the "information item" is an item from which a feature vector is derived and processed (see below) to provide a mapping to the SOM. The data shown in the results list 260 (see below) may be the actual information item which a user seeks (if it is held locally and is short enough for convenient display) or may be data representing and/or pointing to the information item, such as one or more of metadata, a URI, an abstract, a set of key words, a representative key stamp image or the like. This is inherent in the operation "list" which often, though not always, involves listing *data representing* a set of items. The data representing information items may include different types of information. The types of information of each information item and the data representing each type will be referred to as characterising information features.

In a further example, the information items could be stored across a networked work group, such as a research team or a legal firm. A hybrid approach might involve some information items stored locally and/or some information items stored across a local area network and/or some information items stored across a wide area network. In this case, the system could be useful in locating similar work by others, for example in a large multi-national research and development organisation, similar research work would tend to be mapped to similar output nodes in the SOM (see below). Or, if a new television programme is being planned, the present technique could be used to check for its originality by detecting previous programmes having similar content.

It will also be appreciated that the system 10 of Figure 1 is but one example of possible systems which could use the indexed information items. Although it is envisaged that the initial (indexing) phase would be carried out by a reasonably powerful computer, most likely by a non-portable computer, the later phase of accessing the information could be carried out at a portable machine such as a "personal digital assistant" (a term for a data processing device with display and user input devices, which generally fits in one hand), a portable computer such as a laptop computer, or even devices such as a mobile telephone, a video editing apparatus or a video camera. In general, practically any device having a display could be used for the information-accessing phase of operation.

The processes are not limited to particular numbers of information items.

The process of generating a self-organising map (SOM) representation of the information items will now be described with reference to Figures 2 to 6. Figure 2 is a schematic flow chart illustrating a so-called "feature extraction" process followed by an SOM mapping process.

Feature extraction is the process of transforming raw data into an abstract representation. These abstract representations can then be used for processes such as pattern classification, clustering and recognition. In this process, a so-called "feature vector" is generated, which is an abstract representation of the frequency of terms used within a document.

The process of forming the visualisation through creating feature vectors includes:
- Create "document database dictionary" of terms
- Create "term frequency histograms" for each individual document based on the "document database dictionary"
- Reduce the dimension of the "term frequency histogram" using random mapping
- Create a 2-dimensional visualisation of the information space.

Considering these steps in more detail, each document (information item) 100 is opened in turn. At a step 110, all "stop words" are removed from the document. Stop-words are extremely common words on a pre-prepared list, such as "a", "the", "however", "about", "and", and "the". Because these words are extremely common they are likely, on average, to appear with similar frequency in all documents of a sufficient length. For this reason they serve little purpose in trying to characterise the content of a particular document and should therefore be removed.

After removing stop-words, the remaining words are stemmed at a step 120, which involves finding the common stem of a word's variants. For example the words "thrower", "throws", and "throwing" have the common stem of "throw".

A "dictionary" of stemmed words appearing in the documents (excluding the "stop" words) is maintained. As a word is newly encountered, it is added to the dictionary, and running count of the number of times the word has appeared in the whole document collection (set of information items) is also recorded.

The result is a list of terms used in all the documents in the set, along with the frequency with which those terms occur. Words that occur with too high or too low a frequency are discounted, which is to say that they are removed from the dictionary and do not take part in the analysis which follows. Words with too low a frequency may be misspellings, made up, or not relevant to the domain represented by the document set. Words that occur with too high a frequency are less appropriate for distinguishing documents within the set. For example, the term "News" is used in about one third of all documents in a test set of broadcast-related documents, whereas the word "football" is used in only about 2% of documents in the test set. Therefore "football" can be assumed to be a better term for characterising the content of a document than "News". Conversely, the word "fottball" (a misspelling of "football") appears only once in the entire set of documents, and so is discarded for having too low an occurrence. Such words may be defined as those having a frequency of occurrence which is lower than two standard deviations less than the mean frequency of occurrence, or which is higher than two standard deviations above the mean frequency of occurrence.

A feature vector is then generated at a step 130.

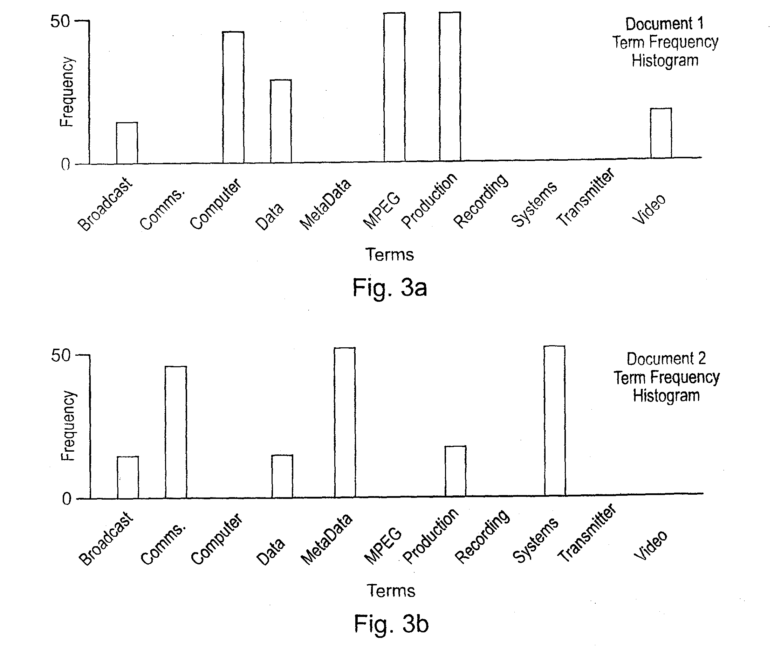

To do this, a term frequency histogram is generated for each document in the set. A term frequency histogram is constructed by counting the number of times words present in the dictionary (pertaining to that document set) occur within an individual document. The majority of the terms in the dictionary will not be present in a single document, and so these terms will have a frequency of zero. Schematic examples of term frequency histograms for two different documents are shown in Figures 3a and 3b.

It can be seen from this example how the histograms characterise the content of the documents. By inspecting the examples it is seen that document 1 has more occurrences of the terms "MPEG" and "Video" than document 2, which itself has more occurrences of the term "MetaData". Many of the entries in the histogram are zero as the corresponding words are not present in the document.

In a real example, the actual term frequency histograms have a very much larger number of terms in them than the example. Typically a histogram may plot the frequency of over 50000 different terms, giving the histogram a dimension of over 50000. The dimension of this histogram needs to be reduced considerably if it is to be of use in building an SOM information space.

Each entry in the term frequency histogram is used as a corresponding value in a feature vector representing that document. The result of this process is a (50000 x 1) vector containing the frequency of all terms specified by the dictionary for each document in the document collection. The vector may be referred to as "sparse" since most of the values will typically be zero, with most of the others typically being a very low number such as 1.

The size of the feature vector, and so the dimension of the term frequency histogram, is reduced at a step 140. Two methods are proposed for the process of reducing the dimension of the histogram.
i) Random Mapping - a technique by which the histogram is multiplied by a matrix of random numbers. This is a computationally cheap process.
ii) Latent Semantic Indexing - a technique whereby the dimension of the histogram is reduced by looking for groups of terms that have a high probability of occurring simultaneously in documents. These groups of words can then be reduced to a single parameter. This is a computationally expensive process.

The method selected for reducing the dimension of the term frequency histogram in the present embodiment is "random mapping", as explained in detail in the Kaski paper referred to above. Random mapping succeeds in reducing the dimension of the histogram by multiplying it by a matrix of random numbers.

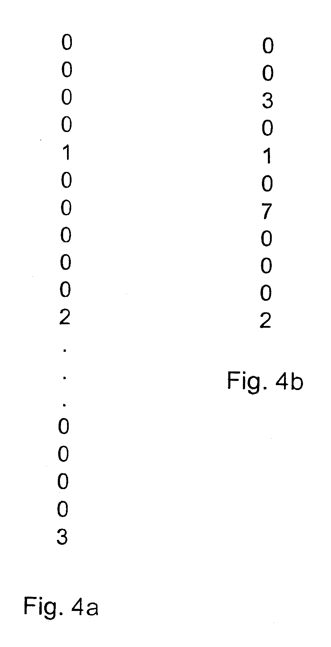

As mentioned above, the "raw" feature vector (shown schematically in Figure 4a) is typically a sparse vector with a size in the region of 50000 values. This can be reduced to size of about 200 (see schematic Figure 4b) and still preserve the *relative* orthogonal characteristics of the feature vector, that is to say, its relationship such as relative angle (vector dot product) with other similarly processed feature vectors. This works because although the number of orthogonal vectors of a particular dimension is limited, the number of *nearly* orthogonal vectors is very much larger.

In fact as the dimension of the vector increases any given set of randomly generated vectors are nearly orthogonal to each other. This property means that the relative direction of vectors multiplied by this a matrix of random numbers will be preserved. This can be demonstrated by showing the similarity of vectors before and after random mapping by looking at their dot product.

It can be shown experimentally that by reducing a sparse vector from 50000 values to 200 values preserves their relative similarities. However, this mapping is not perfect, but suffices for the purposes of characterising the content of a document in a compact way.

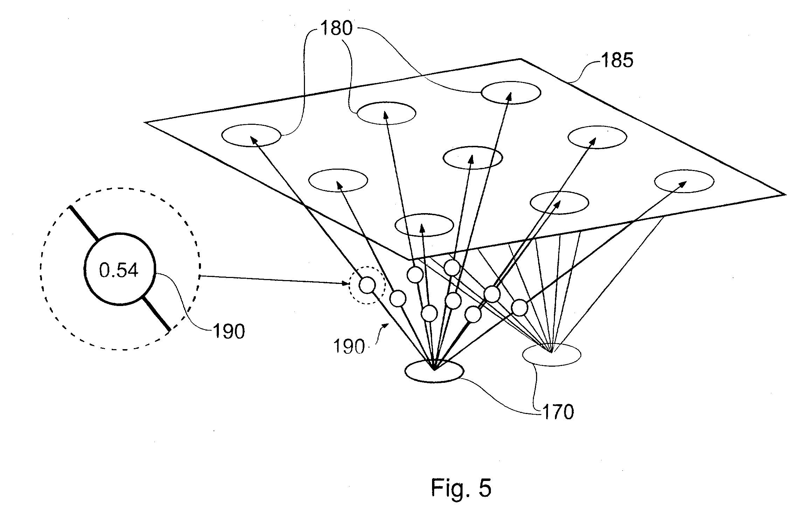

Once feature vectors have been generated for the document collection, thus defining the collection's information space, they are projected into a two-dimensional SOM at a step 150 to create a semantic map. The following section explains the process of mapping to 2-D by clustering the feature vectors using a Kohonen self-organising map. Reference is also made to Figure 5.

A Kohonen Self-Organising map is used to cluster and organise the feature vectors that have been generated for each of the documents.

A self-organising map consists of input nodes 170 and output nodes 180 in a two-dimensional array or grid of nodes illustrated as a two-dimensional plane 185. There are as many input nodes as there are values in the feature vectors being used to train the map. Each of the output nodes on the map is connected to the input nodes by weighted connections 190 (one weight per connection).

Initially each of these weights is set to a random value, and then, through an iterative process, the weights are "trained". The map is trained by presenting each feature vector to the input nodes of the map. The "closest" output node is calculated by computing the Euclidean distance between the input vector and weights associated with each of the output nodes.

The closest node, identified by the smallest Euclidean distance between the input vector and the weights associated with that node is designated the "winner" and the weights of this node are trained by slightly changing the values of the weights so that they move "closer" to the input vector. In addition to the winning node, the nodes in the neighbourhood of the winning node are also trained, and moved slightly closer to the input vector.

It is this process of training not just the weights of a single node, but the weights of a region of nodes on the map, that allow the map, once trained, to preserve much of the topology of the input space in the 2-D map of nodes.

Once the map is trained, each of the documents can be presented to the map to see which of the output nodes is closest to the input feature vector for that document. It is unlikely that the weights will be identical to the feature vector, and the Euclidean distance between a feature vector and its nearest node on the map is known as its "quantisation error".

By presenting the feature vector for each document to the map to see where it lies yields an x, y map position for each document. These x, y positions when put in a look up table along with a document ID can be used to visualise the relationship between documents.

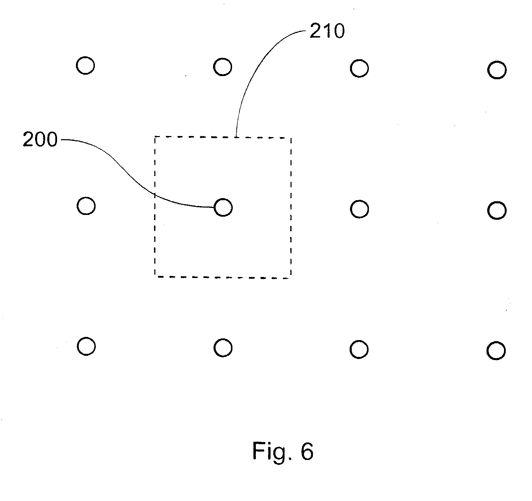

Finally, a dither component is added at a step 160, which will be described with reference to Figure 6 below.

A potential problem with the process described above is that two identical, or substantially identical, information items may be mapped to the same node in the array of nodes of the SOM. This does not cause a difficulty in the handling of the data, but does not help with the visualisation of the data on display screen (to be described below). In particular, when the data is visualised on a display screen, it has been recognised that it would be useful for multiple very similar items to be distinguishable over a single item at a particular node. Therefore, a "dither" component is added to the node position to which each information item is mapped. The dither component is a random addition of ±½ of the node separation. So, referring to Figure 6, an information item for which the mapping process selects an output node 200 has a dither component added so that it in fact may be mapped to any map position around a node 200 within the area 210 bounded by dotted lines on Figure 6.

So, the information items can be considered to map to positions on the plane of Figure 6 at node positions other than the "output nodes" of the SOM process.

At any time, a new information item can be added to the SOM by following the steps outlined above (i.e. steps 110 to 140) and then applying the resulting reduced feature vector to the "pre-trained" SOM models, that is to say, the set of SOM models which resulted from the self-organising preparation of the map. So, for the newly added information item, the map is not generally "retrained"; instead steps 150 and 160 are used with all of the SOM models not being amended. To retrain the SOM every time a new information item is to be added is computationally expensive and is also somewhat unfriendly to the user, who might grow used to the relative positions of commonly accessed information items in the map.

However, there may well come a point at which a retraining process is appropriate. For example, if new terms (perhaps new items of news, or a new technical field) have entered into the dictionary since the SOM was first generated, they may not map particularly well to the existing set of output nodes. This can be detected as an increase in a so-called "quantisation error" detected during the mapping of newly received information item to the existing SOM. In the present embodiments, the quantisation error is compared to a threshold error amount. If it is greater than the threshold amount then either (a) the SOM is automatically retrained, using all of its original information items and any items added since its creation; or (b) the user is prompted to initiate a retraining process at a convenient time. The retraining process uses the feature vectors of all of the relevant information items and reapplies the steps 150 and 160 in full.

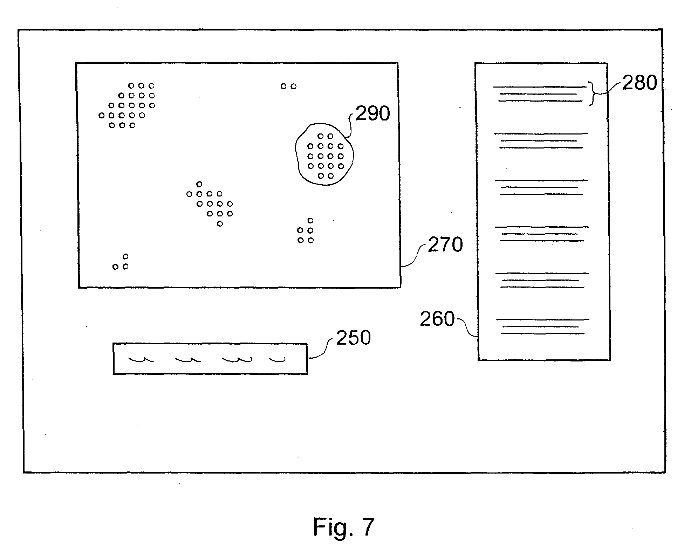

Figure 7 schematically illustrates a display on the display screen 60. The display shows a search enquiry 250, a results list 260 and an SOM display area 270.

In operation, initially, the display area 270 is blank. The user types a key word search enquiry into the enquiry area 250. The user then initiates the search, for example by pressing enter on the keyboard 70 or by using the mouse 80 to select a screen "button" to start the search. The key words in the search enquiry area 250 are then compared with the information items in the database using a standard keyword search technique. This generates a list of results, each of which is shown as a respective entry 280 in the list area 260. Then the display area 270 displays display points corresponding to each of the result items.

Because the sorting process used to generate the SOM representation tends to group mutually similar information items together in the SOM, the results for the search enquiry generally tend to fall in clusters such as a cluster 290. Here, it is noted that each point on the area 270 corresponds to the respective entry in the SOM associated with one of the results in the result list 260; and the positions at which the points are displayed within the area 270 correspond to the array positions of those nodes within the node array.

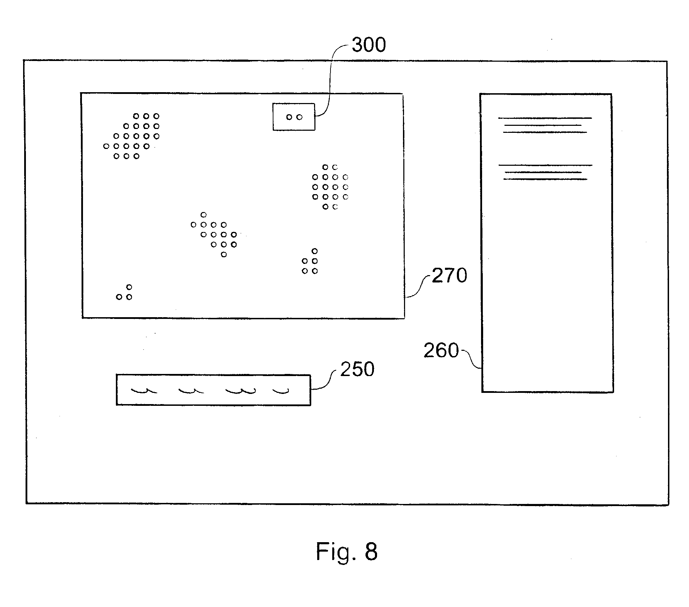

Figure 8 schematically illustrates a technique for reducing the number of "hits" (results in the result list). The user makes use of the mouse 80 to draw a boundary, which in this example is a rectangular box, 300 around a set of the display points displayed in area 270. In the results list area 260, only those results corresponding to points within the boundary 300 are displayed. If these results turn out not to be of interest, the user may draw another boundary encompassing a different set of display points.

It is noted that the results area 260 displays list entries for those results for which display points are displayed within the boundary 300 and which satisfied the search criteria in the word search area 250. The boundary 300 may encompass other display positions corresponding to populated nodes in the node array, but if these did not satisfy the search criteria they will not be displayed and so will not form part of the subset of results shown in the list 260.

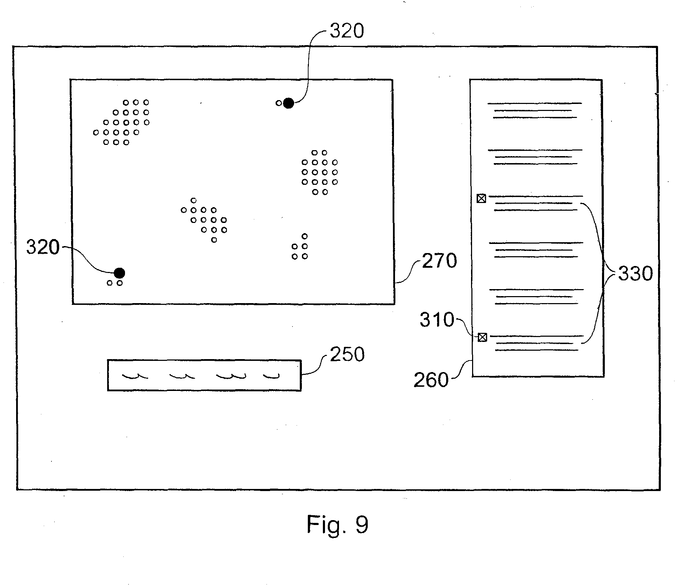

Figure 9 illustrates an embodiment of the present invention.
Referring to Figure 9, step 920, when the Self Organising Map SOM is generated it has no labels, (unlike the SOM of Kohonen). Users require labels to give guidance for exploring the map. In embodiments of the invention the labels are automatically generated to match the particular needs of the users. Users generate a list of results of a search as described with reference to Figure 7 and/or Figure 8. A label is automatically dynamically generated according to the results and used to label the clusters of display points in the area 270.

### Cross-Cluster Association/Assisted Keyword Search

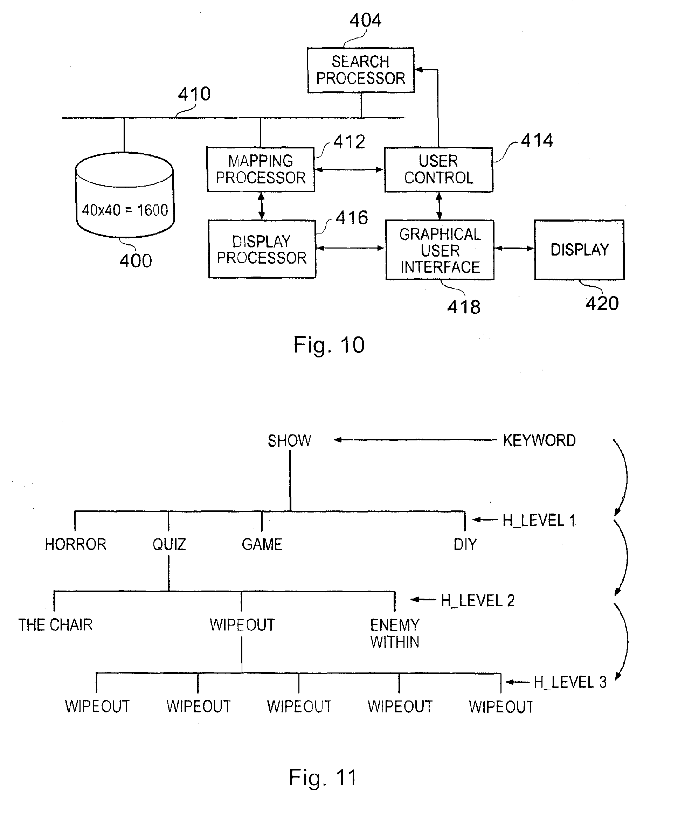

An example embodiment of the present invention will now be described with reference to Figures 10, 11 and 12.

In Figure 10 a data repository 400 containing a database of information items is connected by a data communications network 410 to a mapping processor 412. The mapping processor is connected to a user control 414 and to a display processor 416. An output of the display processor 416 is received by a graphical user interface 418, which interfaces to a display 420. The display processor 416 is operable to process data from the mapping processor for display on the display screen.

The data repository 400 may be separately located to the mapping processor 412. Correspondingly the search processor may be separately located from the data repository 400, mapping processor 412 and those parts shown in Figure 10, which are utilised for displaying information, which are the display processor 416, the graphical user interface 418 and the display 420. Alternatively the mapping processor 412, the search processor 404 and the display processor 416 may be implemented in a form of software modules for execution on a general purpose computer such as that shown in Figure 1. It will be appreciated therefore that the mapping processor, the search processor and the display processor may be produced and located separately.

The embodiment shown in Figure 10 operates substantially as the storage and retrieval data processor as illustrated in Figure 1 in combination with the illustrations in Figures 7, 8 and 9. Figures 7, 8 and 9 provide example illustrations of how information items are searched with respect to a keyword and how the results of the search are displayed. Correspondingly the embodiment shown in Figure 10 is arranged to receive a search query, for example a keyword from the user control 414. In response to the keyword the search is conducted by the search processor 404 to identify a set of x, y positions in the array corresponding to information items identified as a result of the search. For example, for a 40x40 array of nodes there are 1600 positions in a square two-dimensional array. As explained above the search processor searches the information items in accordance with a search query. The search by the search processor results in a set of x, y positions for information items identified by the search processor as corresponding to the search query. The x, y positions of the results of the search are received by the mapping processor 412.

The mapping processor 412 is operable to identify clusters of information items at a first global level by conducting a k-means clustering algorithm. The k-means clustering algorithm identifies the clusters and position of the clusters within the array. The k-means clustering algorithm is disclosed in book entitled "Neural Networks for Pattern Recognition," by Christopher M. Bishop, pp 187-188, Oxford University Press. A further dislosure of the k-means clustering algorithm is disclosed in the web address:
http://cne.gmu.edu/modules/dau/stat/clustgalgs/clust5 bdy.html

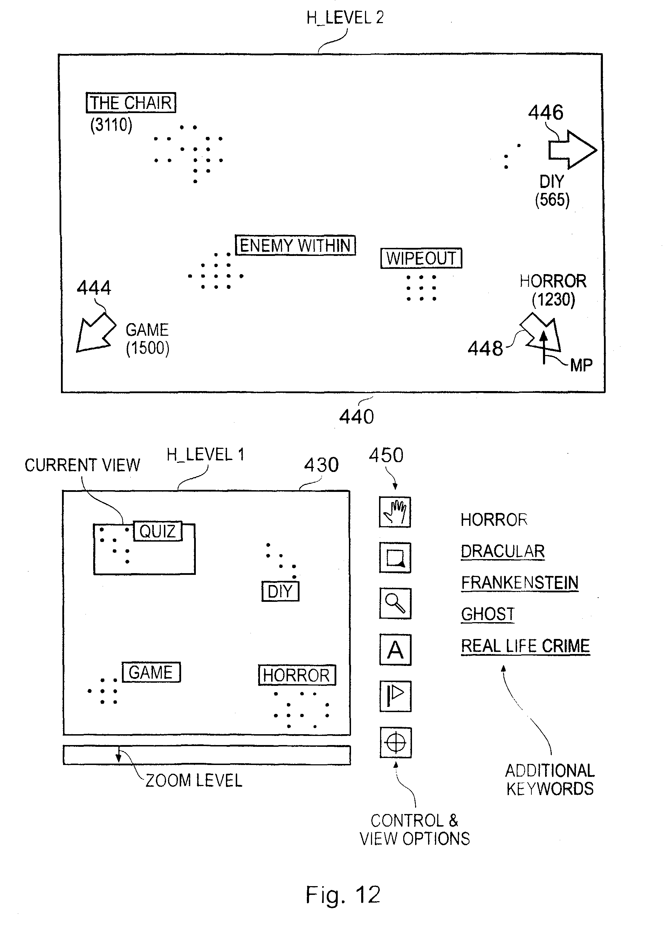

As illustrated in Figure 11 the results of the search on the keyword "show" might identify positions in the array corresponding to information items which have the word "show" as part of their metadata. Therefore, the result of performing the k-means clustering algorithm on the array identifies for example three clusters of information items which are "quiz", "game" and "DIY". These clusters of information items form a first hierarchical level h_level1. The display processor 416 receives data from the mapping processor 412 corresponding to the clustering of information items at the first hierarchical level h_level1. The display processor 416 processes the first hierarchical level of data so as to provide data representing a two-dimensional display of this first hierarchical h_level1. The data generated by the display processor 416 is fed to a graphical user interface 418 for display in a first area 430 on the display screen 420 as shown in Figure 12.

In some embodiments a further operation may be performed by the mapping processor 412 to refine the identification of clusters using the k-means algorithm. The further operation is known as "k-means clustering and pruning". The known k-means clustering process identifies groups of array positions for information items identified in the search results which denote similar information items. A further pruning process of determining whether adjacent sub-clusters of x, y positions of result items are part of the same main cluster is then performed. If a distance between the centres of two sub-clusters is less than a threshold value, then the two sub-clusters are deemed to be part of the same main cluster. The pruning is performed iteratively in known manner until the clustering is stable.

The mapping processor 412 operates to perform a further analysis of each of the clusters of information items identified at the first hierarchical level h_level1. In order to provide a user with a facility for examining the clusters of information items individually and identifying further clusters within those information items the mapping processor 412 forms a further hierarchical level. Accordingly, for each cluster of information items the k-means clustering algorithm is performed for that cluster to identify further clusters within that first hierarchical level of information items. So for example, as illustrated in Figure 11 if the k-means algorithm is performed on the "quiz" cluster then three further clusters are identified at a second hierarchical level h_level2.

As illustrated for the first hierarchical level each cluster is labelled in accordance with a keyword. The keyword is identified by finding the most common word which each of the information items within the cluster have present in the metadata associated with that information item. So for example in the first hierarchical level three clusters are identified by the words "quiz", "game" and "DIY".

In a corresponding manner to the labelling of the clusters of the first hierarchical level h_level1 a keyword is identified for each of the clusters in the second hierarchical level h_level2. Accordingly, the three clusters are labelled "the chair", "wipeout" and "enemy within". Each of these three clusters comprises different episodes of a quiz show.

As will be appreciated a further iteration of the analysis of each cluster can be performed. This is achieved by performing the k-means algorithm on each of the clusters identified at the second hierarchical level h_level2. As illustrated in Figure 11 the "wipeout" information cluster is further analysed using the k-means clustering algorithm. However, at the third hierarchical level h_level3 only individual information items are revealed and so as illustrated in Figure 11 the third hierarchical level h_level3 identifies individual episodes of "wipeout".

The mapping processor 412 is therefore operable to identify clusters of information items at different hierarchical levels. Data representing each of the hierarchical levels is fed to the display processor 416. Accordingly, in combination with the graphical user interface 418 a second area may be displayed on the display 420 which may for example correspond to the second hierarchical level h_level2. Thus, using the zoom control a user may zoom into the clusters displayed in the first hierarchical level h_level1. The zoom control may be operated using the user control 414. Accordingly, zooming into a particular cluster can have an effect of revealing the second hierarchical level of information items h_level2. Alternatively, the user control 414 may be used to select a "current view" area within the first area. Accordingly, the second display is illustrated with respect to the clusters identified within the "quiz" cluster identified at the first hierarchical level shown in the first display h_level1.

A further advantage provided by embodiments of the present invention is an arrangement in which the second or a subsequent level, which is displayed in a second or subsequent area of the display, may be provided with indicators of other clusters. The indicators direct the user to alternative clusters to the keyword associated with the cluster being viewed at a lower hierarchical level. Thus the clusters which are being illustrated at a lower hierarchical level within the second display area 440, will have alternative clusters to the cluster being viewed. For example, in Figure 12 in the first display area 430 the first hierarchical level illustrates the three clusters of "quiz", "game" and "DIY". Since the zoom control is used to zoom in at the "quiz" cluster, then the second display area 440 provides a display of the clusters within the "quiz" cluster which are "the chair", "enemy within" and "wipeout". However, alternative keywords to the "quiz" cluster are "DIY", "horror" and "game" as illustrated in the first area. Accordingly, arrows 444, 446 and 448 are provided to direct the user to clusters of information items which are at the same hierarchical level as the "quiz" cluster being displayed in the second display area. Accordingly, if the user wishes then to review a different cluster from the first hierarchical level to reveal the clusters in the second hierarchical level, then the user can use the arrows to navigate to the alternative clusters within the first hierarchical level. Furthermore, advantageously the arrows are labelled with the keyword label for the cluster, which appears in the first hierarchical level. In other embodiments, in order to provide the user with an illustration of the relative number of items in the cluster then this number is shown alongside the keyword associated with the direction-indicating arrow. The user control and the display may be arranged to indicate this number when the mouse pointer MP passes or is positioned over the indicating arrow.

A further advantageous feature of some embodiments is to provide a list of additional keywords, that is to say the keywords associated with second level clusters within first level clusters. As illustrated in Figure 12 for a clustering providing the further first level cluster of "horror" then the additional words corresponding to the clusters at the second level within that first level cluster "horror" are generated when a mouse pointer MP is positioned over the arrow associated with "horror". As a result the user is provided with a very efficient illustration of the content of the information items associated with the first level clusters without having to view those clusters within the second display area 440. As illustrated in Figure 12 the display area may further include control icons shown generally as 450 which are used to both review and navigate around the information items appearing in the first display area 430.

### Multi-modal Refined Search

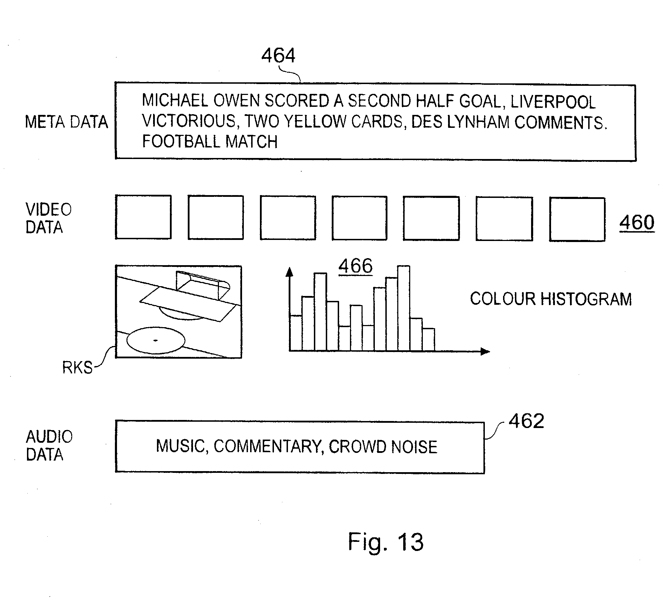

Another example embodiment of the present invention will now be described with reference to Figures 10 in combination with Figures 13 to 17. Figure 13 provides an illustrative representation of the type of characterising information features, which are stored in association with an information item. For example, the information item may be a section of audio/video data from a television programme. In the current example the programme provides highlights of a football match. Accordingly, the data item includes video data 460 and audio data. Associated with the audio data is audio metadata illustrated within a box 462. The audio metadata describes the content and the type of audio signals associated with the video data. For the present example the audio data includes "music", "commentary", "crowd noise" but may include one or more other types of metadata indicating the type of audio signals. In addition to the video data and audio data the information items may also include other metadata which describe the contents or attributes of the video and audio data. For the present example metadata is illustrated within a box 464 and is shown to include a description of the content of the video programme. It is the words contained in this metadata which are used to build a feature vector from which the SOM is generated. However, in other embodiments of the invention the set of information items contained in the data repository 400 may be searched with respect to the audio data that is the audio metadata 462 or on the video data. To this end a representative key stamp may be generated from the frames of video data 460.

The representative key stamp RKS is generated by forming a colour histogram of each of the frames of video data. The colour histogram for all or selected video frames are combined and then normalised to produce a composite colour histogram, which is illustrated in representative form as a bar graph 466 in Figure 13. The composite colour histogram is then compared with the colour histogram for each of the video frames. A distance is determined between the colour histogram for each frame and the composite colour histogram by summing a distance of each of the columns of the colour histogram for each video frame with the corresponding columns of the composite histogram. The representative key stamp RKS having a colour histogram which has the smallest distance with respect to the composite colour histogram is selected. For the programme describing a football match, then correspondingly the representative key stamp produced would be most likely to be a video image of a part of a football pitch, which is illustrated by the representative key stamp RKS shown in Figure 13.

In other embodiments an RKS may be generated for each information item from the video frames, by any of the following methods:
- A user may select the frame, which is considered to be the most representative frame corresponding to the overall content of the information item. This method may provide improved reliability, since the user ensures that the video frame is selected which subjectively represents an information item. However this is more time consuming.
- A user may select the first frame or a random frame within an information item. This may be a less reliable method for selecting an appropriate RKS.
- Other methods for processing the video frames and selecting an RKS based on the content of the image frames are envisaged.

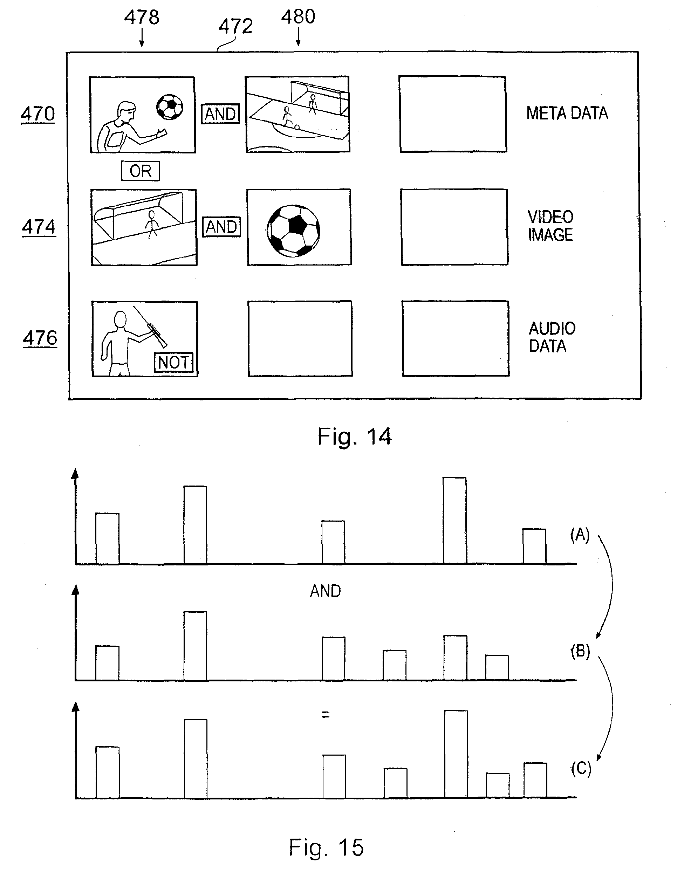

Embodiments of the present invention can provide a facility for producing a refined search based upon selected characterising information features. In one embodiment the search processor 142 is operable to search those information items which were identified in a first search in accordance with either an item of metadata, a video image or audio data. In alternative embodiments the search may be conducted just on metadata or just video data or only audio data or any combination thereof. To facilitate the formation of a search query, the display device 420 shown in Figure 10 may include a further graphical display provided by the graphical user interface 418 which is illustrated in Figure 14.

In Figure 14 a first row 470 within a display area 472 provides a user with a facility for selecting query information based on metadata. Accordingly, if an image representative key stamp from an information item is placed within the window in this row then metadata associated with this information item (as illustrated in Figure 13) will be added to the search query. Accordingly, one or more representative key stamps from different information items may be introduced into the search query for the characterising information feature of type metadata. Correspondingly, in the second row 474 video frames, which have been selected by the user, are introduced to form part of the search query. For example, a user may browse a particular item of video data and select a frame of interest. The user may then place this image frame in the row 474 to form part of the search query. The user may introduce one or more video frames.

A user may also select an information item to be searched in accordance with the audio data within that information item. Accordingly, the third row within the display area 476 provides a facility for a user to introduce a representative image of that information item to identify within the row for audio data that the search query is to include audio data corresponding to that information item within the search query.

In addition to selecting information items to be searched in accordance with the type of the characterising information features, embodiments of the present invention also provide a facility for searching in accordance with Boolean operators between the selected information items. As illustrated in Figure 14, the information items which have been selected for a metadata search, are to be searched in accordance with an "AND" operator as shown between the first two columns 478, 480. However, the search query between the first metadata and the first video image items in the search query are connected by an "OR" operator. The two items to be searched for the video image data are connected by an "AND" operator. Also the information item which is to be searched in accordance with audio data is to be searched in the search query in accordance with a "NOT" operator.

Having built the search query, the search processor 404 is operable to search the information items identified from a keyword search in accordance with the search query built from the selection made by the user and illustrated in Figure 14. The search processor searches the information items differently in dependence upon the type of characterising information features selected as will be explained in the following paragraphs:

For the example of searching for characterising information features such as metadata, then for any information item the feature vector for that information item generated from the metadata can be used to identify a point in the two-dimensional array corresponding to that feature vector. Accordingly, information items within a predetermined distance of that identified position in the array can be returned as a result of the search query. However, if more than one information item has been selected within the metadata search row then a search query must be built in a way which searches both of these items in accordance with the Boolean operator selected.

For the example of the "AND" Boolean operator then the feature vector for each information item is combined to form a composite feature vector as illustrated in Figure 15. To this end, the values associated with each of the words within the metadata are added together and normalised to produce the composite feature vector. Thus as illustrated in Figure 15 the two feature vectors A, B associated with the user selected metadata which have their representative key stamps illustrated in row 470 and columns 478 to 480 and the metadata search query line 470 are combined together to form the feature vector C. The search processor may then take the feature vector C and compare this with the SOM. Having identified the closest position in the array corresponding to the composite feature vector C information items within a predetermined number of positions within the array from that identified position in the array are returned as a result of the search query.

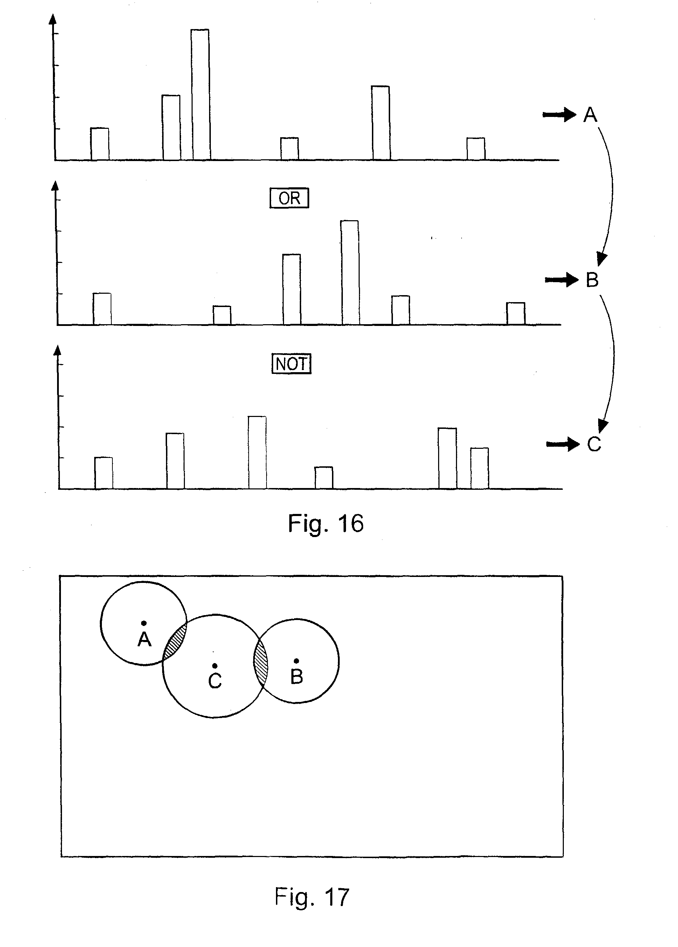

For the example of the Boolean "OR" operator for a corresponding metadata search then for the first feature vector A and the second feature B the corresponding position in the array for those feature vectors are identified. As such, the result of the search query is to return all the information items within a predetermined number of positions of each of those identified points in the array. This is illustrated in Figures 16 and 17. In Figure 17 positions in the two-dimensional array corresponding to feature vector A and corresponding to feature vector B are identified. As illustrated in Figure 17 positions in the array within a predetermined radius of the array positions for A and B can then be returned as identified as a result of the search query. However, if a further feature vector C is identified in the search query and a "NOT" Boolean operator is specified for this further feature vector then again the position in the array corresponding to feature vector C is identified. Accordingly, again the information items within the predetermined radius of array positions from C may be identified. However, as a result of the "NOT" operator any mutually inclusive array positions identified between the radius from the array positions for the feature vectors C and A and B are excluded from the results of the search. Accordingly, the search processor is arranged to return the information items corresponding to the positions in the array produced from A or B but not C.

For the second line in the search query corresponding to video image data being the characterising feature of the search, then the search processor is operable to search the video data for representative key stamps corresponding to the selected user video image. To this end, the colour histogram associated with the user selected video image is compared with the colour histogram for each of the representative key stamps associated with the information items. A distance is calculated between the colour histogram of the representative key stamp of each of the information items and the colour histogram of the user specified video image. This is effected by calculating a distance between each of the columns representing the colour components of that image and summing these distances for each column. The array position corresponding to the information item having the least distance between the colour histogram of the user selected video image and that of the representative key stamp corresponding to that array position is identified. Again the results of the query would be to return information items having array positions within a predetermined number of positions from the identified array position.

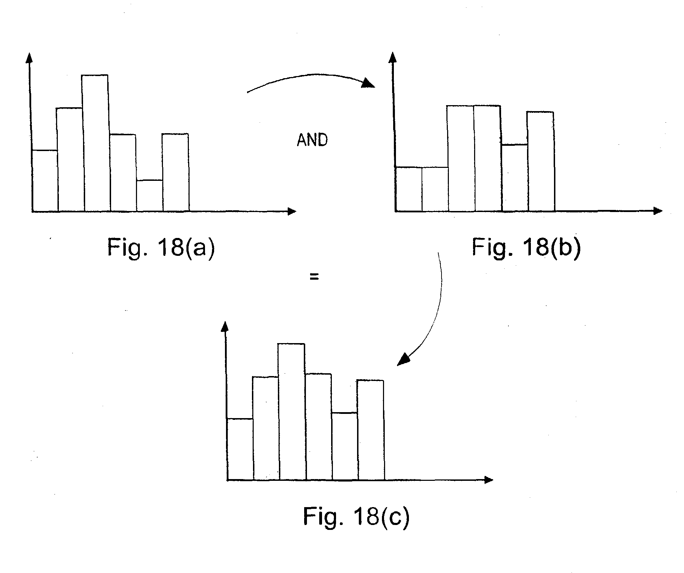

For the case of Boolean operators then again a colour histogram can be formed by combining the colour histograms for two images selected and specified for the Boolean "AND" operator. The process of forming a composite colour histogram is illustrated in Figure 18. The colour histograms for the first and second user selected images provided in row 474 and the columns 478, 480 of the video image search query row within the display area illustrated in Figure 14 are combined by averaging the values in each of the columns of the colour histogram. Thus, the two colour histograms illustrated in Figures 18a and 18b are combined to form the colour histogram formed in Figure 18c. It is this colour histogram which is searched with respect to the representative key stamps of the information items which are to be searched.

For the example of audio data then the search processor may form a feature vector from the audio metadata associated with the selected information item. For example, the audio metadata may identify harmonics present in the audio signal, speech data or whether there is music present within the audio signals represented by the audio metadata. In addition, the metadata may identify whether a particular speaker is present on the audio signal such as Tony Blair or a particular commentator, such as John Motson. Accordingly, again a feature vector may be generated from the selected audio data which may be searched with respect to other feature vectors associated in particular with audio data. In a corresponding way to that explained above, the Boolean operators may be used to combine a search for more than one audio metadata type. For the example of the "AND" operator the audio metadata items may be combined to produce a composite metadata item. Searching for a corresponding information item which has a feature vector which is closest to this composite item will identify an information item. The search processor may then recover information items within a predetermined number of positions within the array for both metadata items when an "OR" operator is specified. Again the ''NOT'' Boolean operator will serve to exclude information items returned having matching audio data from the results of the search query.

The embodiments of the present invention have been provided for refining a search from identified information items. However it will be appreciated that in other embodiments the search query formed by the display illustrated in Figure 14 and the application of that search query with respect to metadata, video image data and audio data may be provided to search the entire set of information within the data repository 400.

Various modifications may be made to the embodiments described above without departing from the scope of the present invention. Various aspects and features of the present invention are defined in the appended claims.

## Claims

1. An information retrieval apparatus comprising a mapping processor operable
to receive data representative of a map of information items from a set of information items identified in a search, the map providing the identified information items with respect to positions in an array in accordance with a mutual similarity of the information items, similar information items mapping to similar positions in the array, and
to process the map data to form a hierarchical clustering of information items providing a first clustering level of information items and at least one other clustering level of information items for clusters of information items within the first level clusters.

2. An apparatus as claimed in Claim 1, wherein the information items include a plurality of **characterising** information features, the **characterising** information features of each information item being used to form a feature vector for each information item, the feature vector being used to form the map data by mapping the information item onto a position within the array.

3. An apparatus as claimed in Claim 1 or 2, wherein the mapping processor is operable to provide the first clustering level of information items with a **characterising** information feature associated with each of the first level clusters of information items and to provide a **characterising** information feature for the clusters of information items within the first level clusters at the other hierarchical level.

4. An apparatus as claimed in Claim 1, 2 or 3, wherein the **characterising** information feature associated with each first level cluster and the other **characterising** information feature associated with each cluster within the other clustering level of information items are formed from a most common **characterising** information feature present in the information items associated with each cluster.

5. An apparatus as claimed in any preceding Claim, wherein the clusters of information items within one of the lower level clusters are associated with one another, whereas the other clusters of the first level are additional clusters of information items with respect to the information items within the lower level cluster.

6. An apparatus as claimed in Claim 3, 4 or 5, wherein the **characterising** information item associated with each cluster is the most common word of the textual information associated with each of the information items within each cluster.

7. An apparatus as claimed in any preceding Claim, wherein the information items comprise textual information, the **characterising** information features being words, and the feature vector for an information item is representative of a set of frequencies of occurrence, within that information item, of each of a group of words.

8. An apparatus as claimed in Claim 7, wherein the information items include textual information, the **characterising** information features being words, the positions within the array being mapped by mutual similarity of at least a part of the textual information.

9. An apparatus as claimed in Claim 7 or 8, wherein the information items are pre-processed for mapping by excluding words occurring within the textual information having more than a threshold frequency amongst the set of information items.

10. An apparatus as claimed in Claim 7, 8 or 9, wherein the information items are pre-processed for mapping by excluding words occurring within the textual information having less than a threshold frequency amongst the set of information items.

11. An apparatus as claimed in any preceding Claim, comprising
a display processor operable in combination with a graphical user interface to display a representation of at least some of the positions of the array corresponds to identified information items as an n-dimensional display array of display points within a display area on a graphical display.

12. An apparatus as claimed in Claim 11, wherein the display area includes at least two areas, one area providing an n-dimensional representation of the first hierarchical level of clusters and the other area providing an n-dimensional representation of the other hierarchical level of clusters, where n is an integer.

13. An apparatus claimed in Claim 11 or 12, comprising
search processor for carrying out a word-related search of the information items;
the search processor and the graphical user interface being arranged to co-operate so that only those display points corresponding to identified information items are displayed.

14. An apparatus as claimed in Claim 11, 12 or 13, wherein the display processor is operable to generate data representative of an indication which when displayed on the graphical user interface provides a user when viewing a first cluster in one of the hierarchical levels of a relative direction within an n-dimensional space of the location of another cluster within the hierarchical level.

15. An apparatus as claimed in Claim 14, wherein the display processor is operable to generate data representative of the number of information items within the other cluster, the number of information items being associated with the indication of the relative direction in the n-dimensional space of the other cluster with respect to the first cluster.

16. An apparatus as claimed in Claims 14 or 15, wherein the display processor is operable in combination with the graphical user interface to display the indication of the relative direction of the other cluster within the first area of the graphical display, and the data representing the number of information items within the cluster is displayable with respect to the indication.

17. An apparatus as claimed in Claim 16, comprising
a user control for selecting information items or clusters of information items within the n-dimensional space using a user controlled pointer, wherein the number of information items are display with respect to the indication of relative direction, in response to the pointer being positioned over the indication.

18. An apparatus as claimed in any of Claims 12 to 17, wherein the number of dimensions n is two.

19. Video acquisition and/or processing apparatus comprising
an information retrieval apparatus as claimed in any preceding claim, wherein the information items include video data with the textual information.

20. Video acquisition and/or processing apparatus as claimed in Claim 19, comprising
a repository containing the information items, and
a data communications network for connecting the repository with the information retrieval apparatus.

21. Video acquisition and/or processing apparatus as claimed in Claim 19 or 20, wherein the information items include a representative key stamp providing a representative image from the information item.

22. Video acquisition and/or processing apparatus as claimed in Claim 21, wherein the common **characterising** information feature associated with a cluster includes a representative key stamp which is common to the cluster.

23. A method of retrieving and displaying information comprising
receiving data representative of a map of information items from a set of information items identified in a search, the map providing the identified information items with respect to positions in an array in accordance with a mutual similarity of the information items, similar information items mapping to similar positions in the array, and
processing the map data to form a hierarchical clustering of information items providing a first clustering level of information items and at least one other clustering level of information items for clusters of information items within the first level clusters.

24. A method as claimed in Claim 23, wherein the processing the map data includes
providing the first clustering level of information items with a **characterising** information feature associated with each of the first level clusters of information items and
providing a **characterising** information feature for the clusters of information items within the first level clusters at the other hierarchical level.

25. A method as claimed in Claim 24, wherein the information items include a plurality of **characterising** information features, the **characterising** information features of each information item being used to form a feature vector for each information item, the feature vector being used to map the information item onto a position within the array.

26. A method as claimed in Claim 23, 24 or 25, comprising
displaying a representation of at least some of the positions of the array as an n-dimensional display array of display points within a display area on a graphical display.

27. A method as claimed in Claim 26, wherein the display area includes at least two areas, one area providing an n-dimensional representation of the first hierarchical level of clusters and the other area providing an n-dimensional representation of the other hierarchical level of clusters.

28. A method as claimed in Claim 27, wherein the number of dimensions n is two.

29. Computer software having program code for carrying out a method according to any one of claims 23 to 27.

30. A medium for providing program code according to claim 29.

31. A medium according to claim 30, the medium being a storage medium.

32. A medium according to claim 30, the medium being a transmission medium.
